# EUROPEAN PATENT APPLICATION

(11) **EP 4 513 608 A2**
(43) Date of publication of application: **26.02.2025**
(21) Application number: 24196389.1
(22) Date of filing: 26.08.2024
(51) Int. Cl.: H01M 10/0567, H01M 10/42

(54) **ELECTROLYTE ADDITIVE, METHODS OF SYNTHESIS AND APPLICATIONS THEREOF**

(30) Priority: 25.08.2023 TW 112132130
(71) Applicant: National Taiwan University of Science and Technology, 106 Taipei City (TW)
(72) Inventor: Hwang, Bing-Joe, 106 Taipei (TW); Mekonnen Tekaligne, Teshager, 106 Taipei (TW); Yang, Sheng-Chiang, 106 Taipei (TW); Su, Wei-Nien, 106 Taipei (TW); Liu, Hsin-Yueh, 106 Taipei (TW)
(74) Representative: Cabinet Chaillot

(57) **Abstract**

The present invention provides an electrolyte additive with multiple functions when introduced into an electrolyte. Specifically, under high or overcharged voltage conditions, a high redox potential enables stable shuttling between the electrodes of an electrochemical device, facilitating oxidation reactions at the positive electrode and reducing exothermic reactions occurring at the electrodes. The oxidized electrolyte additive can then shuttle to the negative electrode, where it converts inactive metal into metal ion while self-reducing to its original state. It then diffuses back to the positive electrode for further oxidation, creating a cyclic reaction that effectively rejuvenates inactive metal and significantly prolongs the lifespan of the electrochemical device. Simultaneously, this electrolyte additive can generate a beneficial solid electrolyte interfacial functional group. This process results in the formation of a dense and beneficial solid electrolyte interface layer on the surface of the negative electrode, thereby enhancing the battery's overall performance.

## Description

### FIELD OF INVENTION

Present invention is related to an electrolyte additive, in particularly the electrolyte additive designed for applications of electrochemical devices.

One of the preferred applications for the electrolyte additive of the present invention pertains to secondary batteries. This application will be described and exemplified in the following as a preferred embodiment. However, the scope of equivalent applications covered by the present invention extends beyond this singular use. Other electrochemical devices, sharing similarities or serving similar purposes, are encompassed within the range of applications addressed by the present invention.

### BACKGROUND OF THE INVENTION

While metal batteries offer high energy density, a significant challenge lies in their limited cycle life. The primary cause of performance degradation is the accumulation of inactive metal (such as lithium, often referred to as "dead lithium"). This accumulation can result in poor solid electrolyte interface (SEI) formation, encapsulation of the metal, or the development of long, discontinuous dendrites. These issues hinder the efficient flow of electrons within the battery. As inactive metals continue to accumulate, there is a subsequent depletion of active metal ions and electrolytes. Simultaneously, the presence of long dendrites increases the risk of internal short circuits, posing safety concerns. Moreover, when metal batteries are overcharged, the residual electrical energy rises, leading to a rapid increase in the local voltage at the electrode surfaces. This exponential voltage increase can cause irreversible electrolyte oxidation and trigger exothermic reactions, ultimately resulting in thermal runaway and a severe disaster.

### SUMMARY OF THE INVENTION

In order to solve the problems of the prior art, the present invention provides a method for prolonging the lifespan of the electrochemical device, the steps of which comprise: providing an electrochemical device comprising at least a positive electrode, a negative electrode, and an electrolyte provided in the electrochemical device,the electrolyte containing an electrolyte additive, and charging and discharging the electrochemical device at least once by means of an overcharge voltage. The electrolyte additive maintains an oxidized state at the positive electrode; the oxidized electrolyte additive shuttles to the negative electrode to oxidize a metal deposited on the negative electrode into a metal ion which converts the electrolyte additive to a reduced state and shuttles back to the positive electrode where the oxidized state is restored.

From the above description, it can be seen that the electrolyte additive applicable to the electrochemical device provided by the present invention has a double safety mechanism, which can selectively activate the oxidation-reduction function at high voltage (4.2V-6V) and stably shuttle between the positive and negative electrodes, and the additive can activate the oxidation potential (state) at the positive electrode in the state of overcharge, which can reduce the exothermic reaction of the electrodes caused by the overcharge. On the other hand, in the case of a lithium battery, the oxidized electrolyte additive can shuttle to the negative electrode, convert the dead lithium into lithium ions and reduce itself into free radicals, then shuttle back to the positive electrode for the next oxidation cycle after the formation of free radicals, this effectively revitalizes the dead lithium and greatly prolongs the battery life. In addition, this additive can generate beneficial solid electrolyte interface (SEI) groups, such as fluorine groups, to form a beneficial SEI layer on the surface of the negative electrode, which enhances the performance of the battery.

### BRIEF DESCRIPTION OF THE DRAWINGS

The steps and the technical means adopted by the present invention to achieve the above and other objects can be best understood by referring to the following detailed description of the preferred embodiments and the accompanying drawings.
FIG. 1 is a schematic diagram of the steps for synthesizing a compound of the series Formula (5-1) in a first preferred embodiment of the electrolyte additive of the present invention;
FIG. 2 is a schematic diagram of the steps for synthesizing a compound of the series Formula (6-1) in a second preferred embodiment of the electrolyte additive of the present invention;
FIG. 3 is a schematic diagram of the steps for synthesizing a compound of the series Formula (7-1) in a third preferred embodiment of the electrolyte additive of the present invention;
FIG. 4 is a diagram showing the regeneration mechanism of dead lithium in a lithium battery in Embodiment 3-1 of the electrolyte additive of the present invention;
FIGS. 5A and 5B are the cyclic voltammograms of the comparative example without the addition of the electrolyte additive and the preferred embodiment of the present invention with the addition of 0.3 M of the electrolyte additive, respectively;
FIGS. 6A and 6B are the voltage profiles of the comparative example without the addition of the electrolyte additive and the preferred embodiment of the present invention with the addition of 0.3 M of the electrolyte additive, respectively;
FIG. 7 is a linear scanning voltammetric curve of the comparative example without the addition of the electrolyte additive and the preferred embodiment of the present invention with the addition of the electrolyte additive;
FIGS. 8A and 8B are scanning electron microscopy (SEM) images of the comparative example without the addition of the electrolyte additive and the preferred embodiment of the present invention with the addition of 0.3 M of the electrolyte additive after 1cycle of lithium stripping, respectively;
FIGS. 9A and 9B are FIB-SEM images of the comparative example without the addition of the electrolyte additive and the preferred embodiment of the present invention with the addition of 0.3 M of the electrolyte additive after 1 cycle of lithium stripping, respectively;
FIGS. 10A and 10B are X-ray photoelectron spectroscopy (XPS) images of the comparative example without the addition of the electrolyte additive and the preferred embodiment of the present invention with the addition of 0.3 M of the electrolyte additive after 1 cycle of lithium stripping, respectively;
FIG. 11A and FIG. 11B are titration gas chromatography (TGC) analyses of the comparative example without the addition of the electrolyte additive and the preferred embodiment of the present invention with the addition of the electrolyte additive, respectively;
FIG. 12A and FIG. 12B are analyses of an inactive metal (dead lithium) content after several cycles of the comparative example without the addition of the electrolyte additive and the preferred embodiment of the present invention with the addition of 0.3 M of the electrolyte additive, respectively;
FIG. 13 is test data of acapacity retention rate for the number of charge/discharge cycles using a normal voltage of 4.3V and an overcharge voltage of 4.5V for the comparative example without the addition of the electrolyte additive and the preferred embodiment of the present invention with the addition of the electrolyte additive;
Fig. 14 is test result of a coulombic efficiency and a capacity retention rate of an anode-free lithium cell (Cu||NMC anode-free cell) tested under constant charge/discharge at 0.2C of the comparative example and the preferred embodiment of the present invention; and
FIG. 15 is test result of a coulombic efficiency and a capacity retention rate of a lithium cell (Li||NMC cell) tested under constant charge/discharge at 0.2C of the comparative example and the preferred embodiment of the present invention.

### DETAILED DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts. It is not intended to limit the method by the exemplary embodiments described herein. In the following detailed description, for purposes of explanation, numerous specific details are set forth in order to attain a thorough understanding of the disclosed embodiments. It will be apparent, however, that one or more embodiments may be practiced without these specific details. As used in the description herein and throughout the claims that follow, the meaning of "a", "an", and "the" may include reference to the plural unless the context clearly dictates otherwise. Also, as used in the description herein and throughout the claims that follow, the terms "comprise or comprising", "include or including", "have or having", "contain or containing" and the like are to be understood to be open-ended, i.e., to mean including but not limited to.

### <Electrolyte additive>

The present invention provides an electrolyte additive comprising chemical formulas of the following Formula (1): 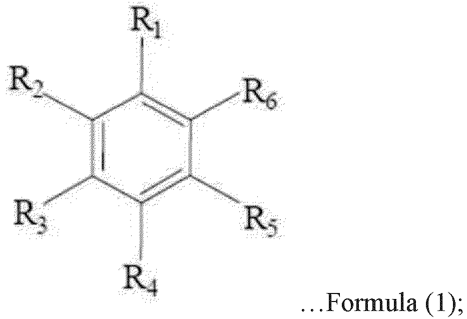 wherein R1, R2, R3, R4, R5, and R6 are two or a combination of Formula (2), Formula (3), Formula (4) and Hydrogen (H) below. 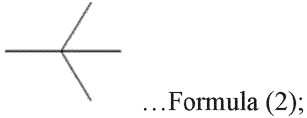 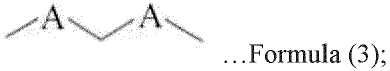 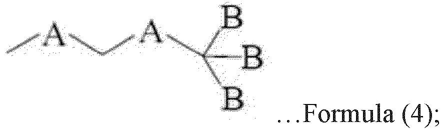 wherein in formula (1) to (4), A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).

### <First Preferred Embodiment of Electrolyte Additive>

A first preferred embodiment series of the electrolyte additive of the present invention comprises the following chemical formulas of Formula (5-1), Formula (5-2), or Formula (5-3): 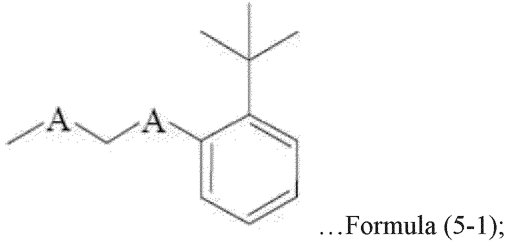 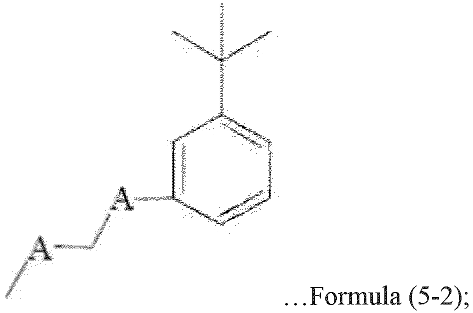 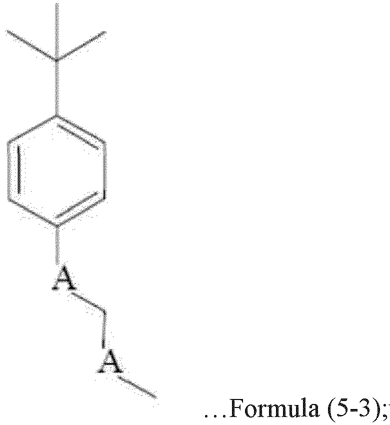 wherein in formula (5-), (5-2) and (5-3), A denotes oxygen (O), sulfur (S), selenium (Se), tellurium (Te), or combinations thereof; and the remaining elements not denoted are carbon (C) or hydrogen (H).

### <Second Preferred Embodiment of Electrolyte Additive>

A second preferred embodiment series of the electrolyte additive of the present invention comprises the following chemical formulas of Formula (6-1), Formula (6-2), or Formula (6-3): 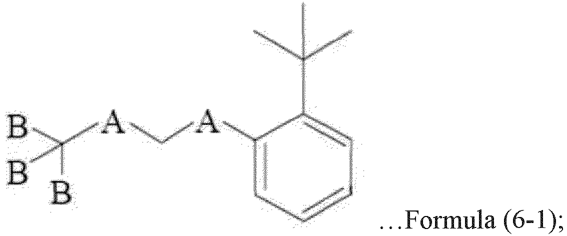 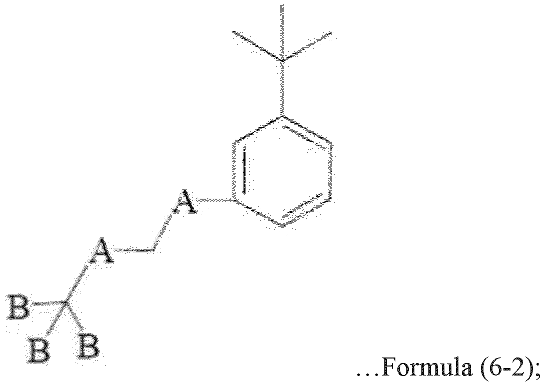 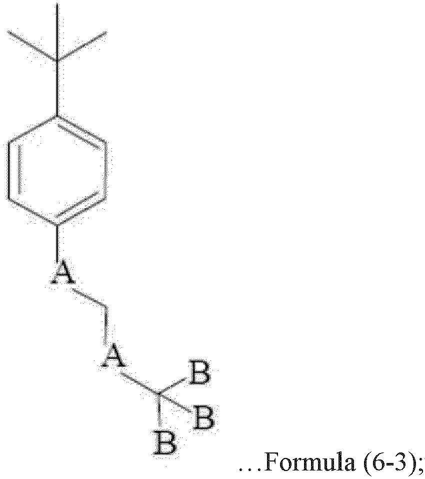 wherein in formula (6-1), (6-2) and (6-3), A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).

### <Third Preferred Embodiment of Electrolyte Additive>

A third preferred embodiment series of the electrolyte additive of the present invention comprises the following chemical formulas of Formula (7-1) or Formula (7-2): 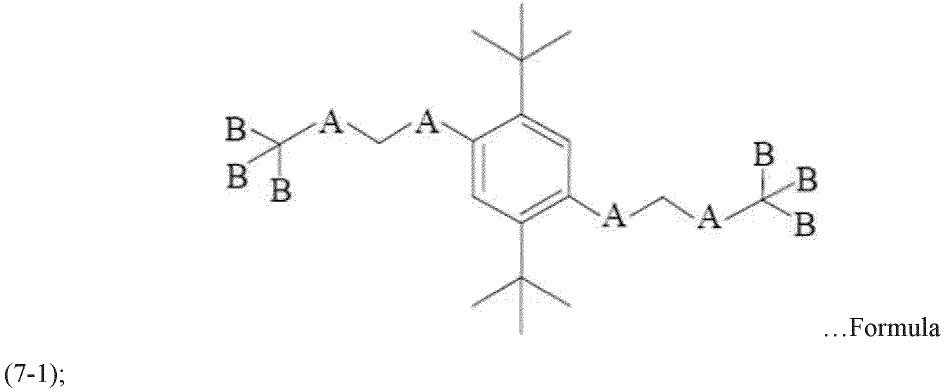 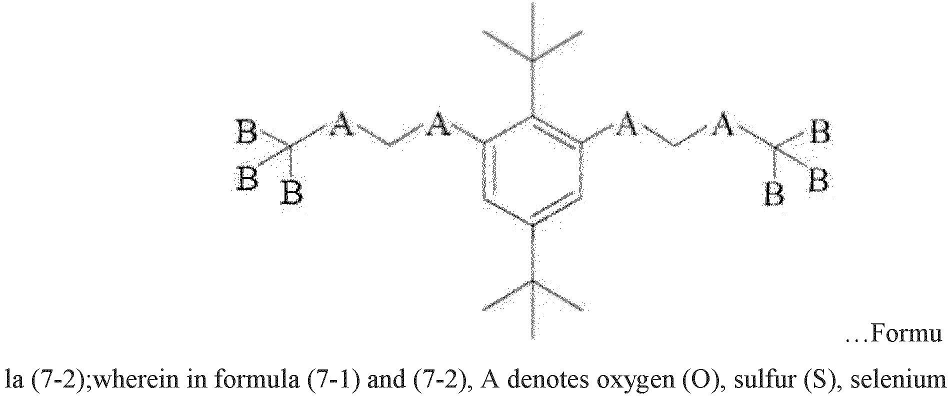 (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).

Please refer to Tables 1-1 to 1-3 below for several examples of the first to third preferred embodiment series of the electrolyte additive described above.

**Table 1-1.**

| First Preferred Embodiment Series | Embodiment Number | Descriptions |
|---|---|---|
| 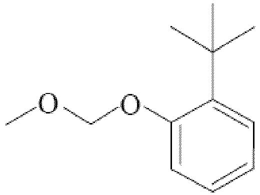 | Embodiment 1-1 | R1 and R2 are neighboring substitutions of Formula (2) and Formula (3) respectively, wherein A is oxygen (O). |
| 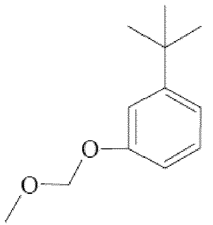 | Embodiment 1-2 | R1 and R3 are interstitial substitutions of Formula (2) and Formula (3), respectively, wherein A is oxygen (O). |
| 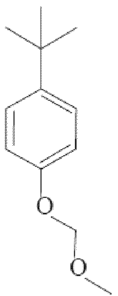 | Embodiment 1-3 | R1 and R4 are para substitutions of Formula (2) and Formula (3), respectively, wherein A is oxygen (O). |

**Table 1-2.**

| Second Preferred Embodiment Series | Embodiment Number | Descriptions |
|---|---|---|
| 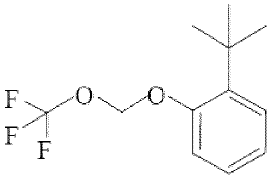 | Embodiment 2-1 | R1 and R2 are neighboring substitutions of Formula (2) and Formula (4) respectively, wherein A is oxygen (O) and B is fluorine (F). |
| 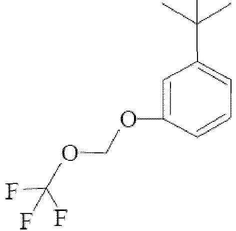 | Embodiment 2-2 | R1 and R3 are interstitial substitutions of Formula (2) and Formula (4), respectively, wherein A is oxygen (O) and B is fluorine (F). |
| 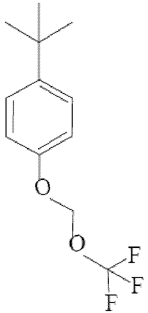 | Embodiment 2-3 | R1 and R4 are para substitutions of Formula (2) and Formula (4), respectively, wherein A is oxygen (O) and B is fluorine (F). |

**Table 1-3.**

| Third Preferred Embodiment Series | Embodiment Number | Descriptions |
|---|---|---|
| 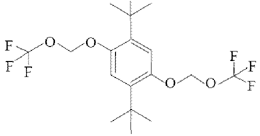 1,4-bis((trifluoromethoxy)methoxy) -2,5-di-tert-butylbenzene (p-TFMB) | Embodiment 3-1 | R1, R2, R4, and R5 are substitutions of Formula (2) and Formula (4), respectively, wherein A is oxygen (O) and B is fluorine (F). |
| 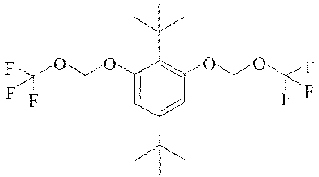 1,4-bis((trifluoromethoxy)methoxy) -2,6-di-tert-butylbenzene (o-TFMB) | Embodiment 3-2 | R1, R2, R4, and R6 are substitutions of Formula (2) and Formula (4), respectively, wherein A is oxygen (O) and B is fluorine (F). |

### <Method of Synthesis of the First Preferred Embodiment of the Electrolyte Additive>

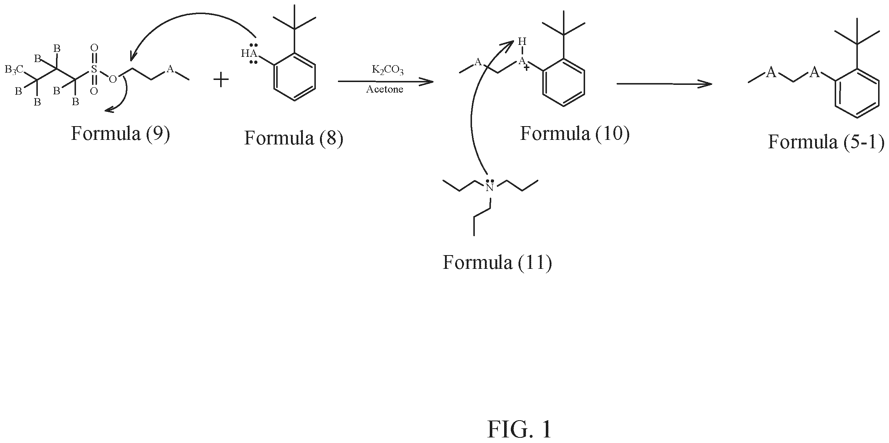

Referring to FIG. 1, a preferred embodiment of a method of synthesis for the compound of Formula (5-1) in the aforementioned first preferred embodiment series is as follows:
Using the compounds of Formula (8) and Formula (9) in FIG. 1, a compound of Formula (10) is obtained by reacting a positively charged AH group in the Formula (8) with a carbon-oxygen bond next to the sulfonate group in the Formula (9) in an environment of potassium carbonate (K₂CO₃) and acetone.

Next, the compound of Formula (10) is reacted with a compound of Formula (11), and the compound of Formula (5-1) is obtained by reacting a positively charged nitrogen atom of the Formula (11) with a hydrogen atom on the original positively charged AH group of the Formula (10).

Wherein, A in the foregoing formula also represents oxygen (O), sulfur (S), selenium (Se), tellurium (Te) or a combination thereof, and B is halogen, nitrile group (CN), hydrogen (H), nitro group (NO₂), nitrosyl group (NO), amine group (NH₂) or a combination thereof; and the remaining elements not denoted are carbon (C) elements. It is noteworthy that the compounds of Formula (5-2) and Formula (5-3) in the first preferred embodiment series can be synthesized correspondingly with different substituent positions but by the same synthetic route.

### <Method of Synthesis of the Second Preferred Embodiment of the Electrolyte Additive>

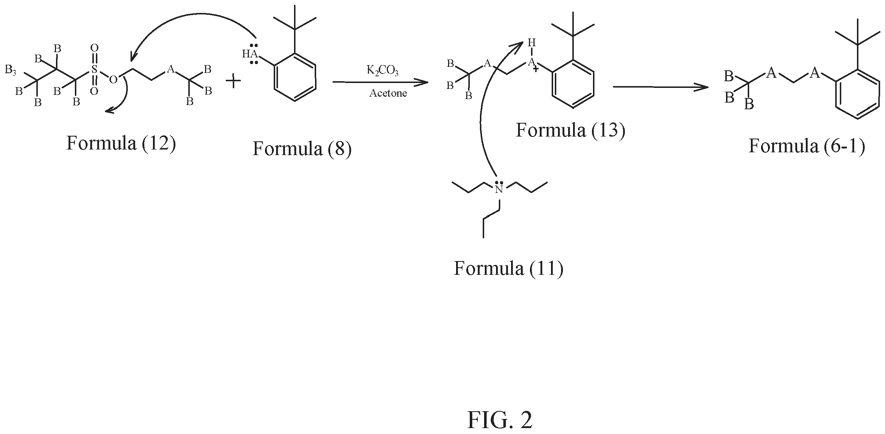

Referring to FIG. 2, a preferred embodiment of a method of synthesis for the compound of Formula (6-1) in the aforementioned second preferred embodiment series is as follows:
Using the compounds of Formula (8) and Formula (12) in FIG. 2, a compound of Formula (13) is obtained by reacting a positively charged AH group in the Formula (8) with a carbon-oxygen bond next to the sulfonate group in the Formula (12) in an environment of potassium carbonate (K₂CO₃) and acetone.

Next, the compound of Formula (13) is reacted with the compound of Formula (11), and the compound of Formula (6-1) is obtained by reacting a positively charged nitrogen atom of the Formula (11) with a hydrogen atom on the original positively charged AH group of the Formula (13).

Wherein, A in the foregoing formula also represents oxygen (O), sulfur (S), selenium (Se), tellurium (Te) or a combination thereof, and B represents halogen, nitrile group (CN), hydrogen (H), nitro group (NO₂), nitrosyl group (NO), amine group (NH₂) or a combination thereof; and the remaining elements not denoted are carbon (C) elements. It is noteworthy that the compounds of Formula (6-2) and Formula (6-3) in the second preferred embodiment series can be synthesized correspondingly with different substituent positions but by the same synthetic route.

### <Method of Synthesis of the Third Preferred Embodiment of the Electrolyte Additive>

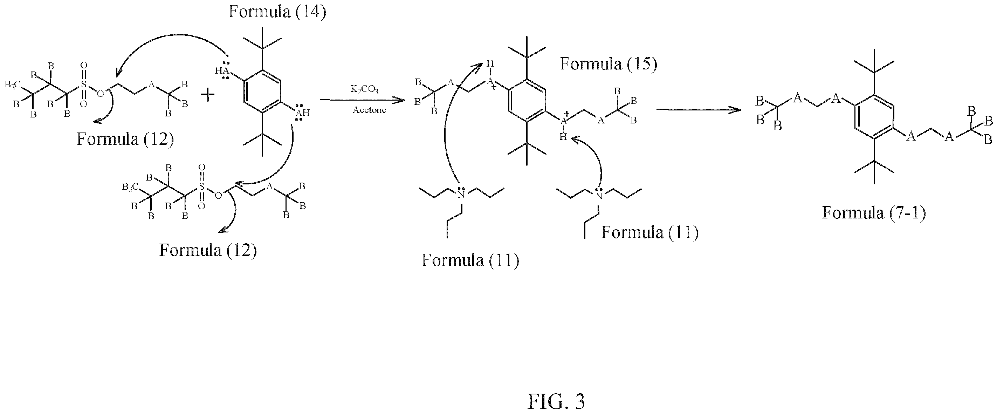

Referring to FIG. 3, a preferred embodiment of a method of synthesis for the compound of Formula (7-1) in the aforementioned third preferred embodiment series is as follows:
Using the compounds of Formula (14) and Formula (12) in FIG. 3, a compound of Formula (15) is obtained by reacting two positively charged AH groups in the Formula (14) with a carbon-oxygen bond next to the sulfonate group of the two Formulas (12) in an environment of potassium carbonate (K₂CO₃) and acetone.

Next, the compound of Formula (15) is reacted with the two compounds of Formula (11) and the compound of Formula (7-1) is obtained by reacting a positively charged nitrogen atom of the two Formulas (11) with a hydrogen atom on the two original positively charged AH groups of the Formula (15).

Wherein, A in the foregoing formula also represents oxygen (O), sulfur (S), selenium (Se), tellurium (Te) or a combination thereof, and B is halogen, nitrile group (CN), hydrogen (H), nitro group (NO₂), nitrosyl group (NO), amine group (NH₂) or a combination thereof; and the remaining elements not denoted are carbon (C) elements. It is noteworthy that the compounds of Formula (7-2) in the third preferred embodiment series can be synthesized correspondingly with different substituent positions but by the same synthetic route.

### <Applications of Electrolyte Additive>

The present invention further provides a method of prolonging the lifespan of an electrochemical device at high potentials using each preferred embodiment of the aforementioned electrolyte additive, comprising the steps of:
Providing an electrochemical device comprising at least a positive electrode, a negative electrode, and an electrolyte disposed in the electrochemical device comprising preferred embodiments of the electrolyte additives of the present invention as described hereinabove. Preferably, the positive electrode and the negative electrode may, where possible, comprise a separator membrane;
Charging and discharging the electrochemical device with an overcharge voltage causes an electrochemical reaction to occur in the electrochemical device; preferably the electrolyte additive maintains an oxidation potential (or oxidation state) on the positive electrode;
The electrolyte additive in the oxidized state shuttles to the negative electrode to oxidize an inactive metal deposited on the negative electrode into a metal ion, so that the metal ion again participates in the electrochemical reaction; and the electrolyte additive becomes reduced and shuttles back to the positive electrode, restoring its oxidized state at the positive electrode;
Step 4 (optional): repeating Steps 2 to 3 above, further reducing the metal into the metal ion.

The above overcharge voltage may have different values for different electrochemical devices, for example for a lithium battery, the preferred overcharge potential may be 4.2V to 6V which allows the electrolyte additive to initiate shuttling to the negative electrode to oxidize the metal into the metal ions. Alternatively, the overcharge voltage described in the present invention is higher for any commercially applicable electrochemical device. On the other hand, in the present invention, the metal deposited on the negative electrode is preferably referred to as the inactive metal. In the case of a lithium battery, for example, it is preferred that the inactive lithium metal deposited on the negative electrode, also referred to as dead lithium, after initiation of the electrochemical reaction is usually encapsulated by a hazardous solid electrolyte interface and has lost its ability to participate in the electrochemical reaction, whereas the present invention enables the oxidation of the inactive metal back to metal ions through the use of electrolyte additives to re-participate in the electrochemical reaction and maintain the capacitive performance of the electrochemical device.

Wherein the electrochemical device comprises a lithium battery, a sodium battery, a zinc battery, an aluminum battery, a potassium battery, a magnesium battery, or a combination thereof. The metal and the metal ion correspond to the type of the electrochemical device, e.g., if the electrochemical device is a lithium battery, then the metal is a lithium metal and the metal ion is a lithium-ion. The positive electrode preferably comprises a positive material and the negative electrode may or may not comprise a negative material. If the negative electrode does not comprise the negative electrode material, then the device is an anode-free (no anode) electrochemical device.

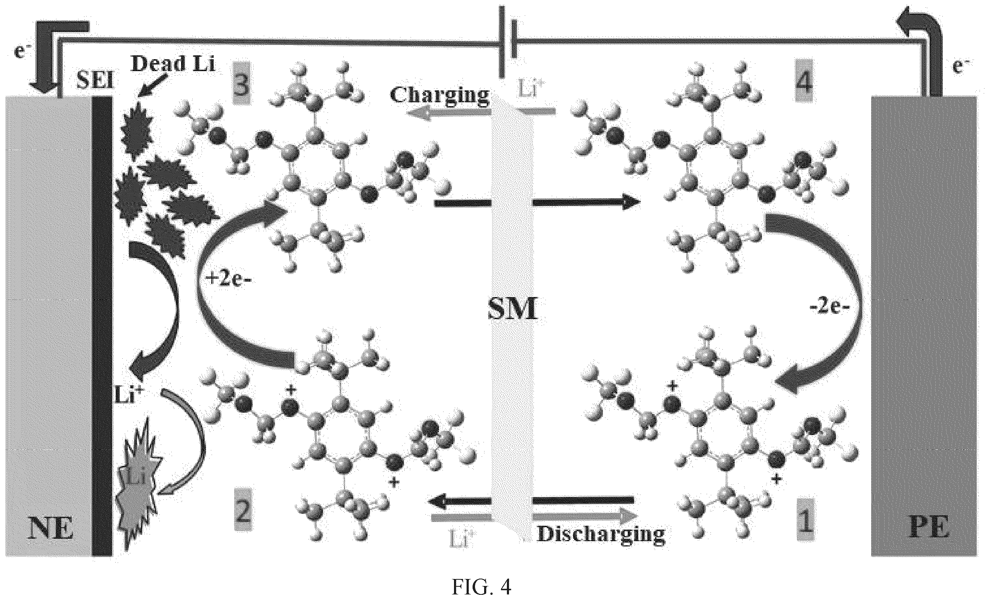

Referring to FIG. 4, the electrochemical device is the lithium battery (the positive electrode (PE) contains a ternary cathode material, and the negative electrode (NE) is a copper foil, and a separator membrane (SM) set in the middle to divide the PE and the NE), and the electrolyte additive (added to the electrolyte comprising 1M LiPF6 and EC:DEC in suitable ratio)is Embodiment 3-1 in Table 1-3 above as an example. Under normal conditions, the charge potential is 4.2V. The present invention uses an overcharge state (greater than 4.2V, e.g., 4.5V) to keep the electrolyte additive at the positive electrode in the state of oxidation potential (position 1 in FIG. 4), which reduces the exothermic reaction of the positive electrode due to overcharging. By the other mechanism, the oxidized electrolyte additive can be shuttled to the negative electrode (position 2 in FIG. 4) to convert the lithium metal (or dead lithium) at the negative electrode into lithium ion (position 3 in FIG. 4), then the electrolyte additive can be shuttled back to the positive electrode to be oxidized after reduction (position 4 in FIG. 4) to effectively revive the dead lithium, thereby greatly prolonging the lifespan of the battery. In addition, the electrolyte additive can even promote the negative electrode to generate a beneficial solid electrolyte interface (SEI).

### <Validity Tests>

In the following, the present invention will conduct a series of validity tests using the electrochemical device as the lithium battery, and the electrolyte additive (added to the electrolyte comprising 1M LiPF6 and EC:DEC) is Embodiment 3-1 in Table 1-3 above as an example.

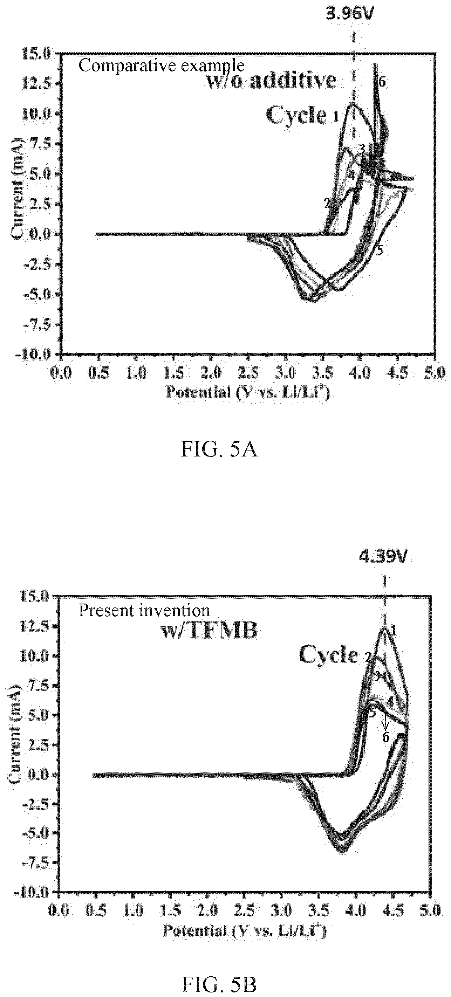

Referring to FIG. 5A and FIG. 5B, which are cyclic voltammograms (CV) of the comparative example without the addition of the electrolyte additive (FIG. 5A) and the preferred embodiment of the present invention (FIG. 5B) with the addition of 0.3 M of the electrolyte additive, respectively. It can be seen that the performance of the embodiment of the present invention containing the electrolyte additive is stable under low voltage and high voltage, indicating that the present invention activates the protective mechanism under high voltage and is suitable for operation under high voltage. On the other hand, the performance of the comparative example is poor after the voltage exceeds 3.96V and even fails to show a normal CV at the 6^{th}cycle, indicating that it cannot be operated under high voltage and the electrical properties are greatly reduced.

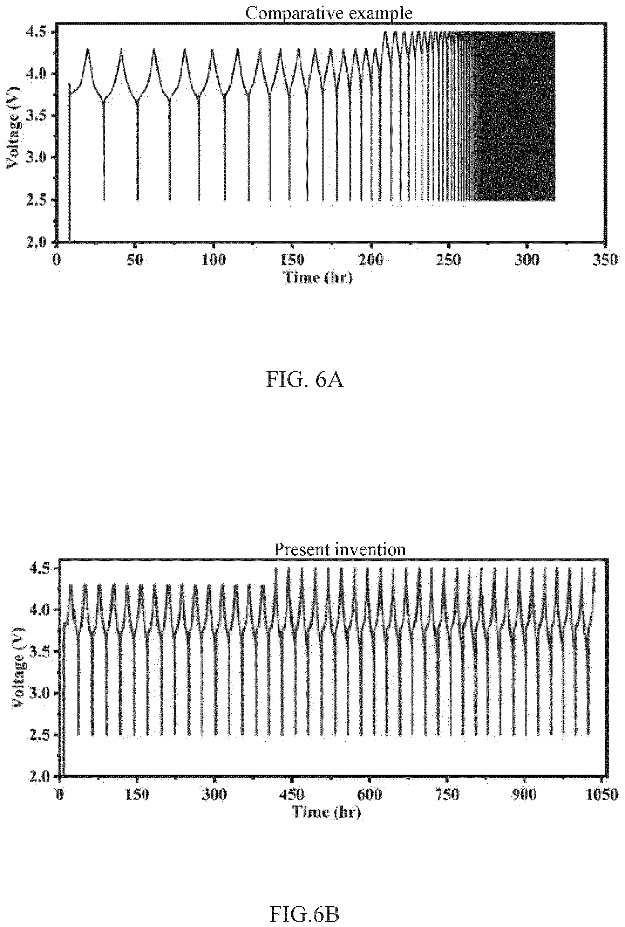

Referring to FIG. 6A and FIG. 6B, which are voltage profiles of the comparative example without the addition of the electrolyte additive (FIG. 6A) and the preferred embodiment of the present invention with the addition of 0.3 M of the electrolyte additive (FIG. 6B), respectively. Taking the base potential of 4.2 V as a standard, 4.3 V is used before 15 cycles of charging and discharging, and after 15 cycles, the voltage is increased to 4.5 V in the high-voltage overcharge state. FIG. 6A shows that the battery loses capacity quickly when overcharged, while FIG. 6B shows that the battery still maintains good capacity and electrical properties when overcharged. From this overcharge electrical property test, it can be seen that the embodiment of the present invention containing the electrolyte additive has excellent overcharge adaptability. In fact, the electrolyte additive of the present invention can oxidize the inactive lithium into the lithium ion that can re-participate in the electrochemical reaction, thus maintaining the electrical properties of the battery.

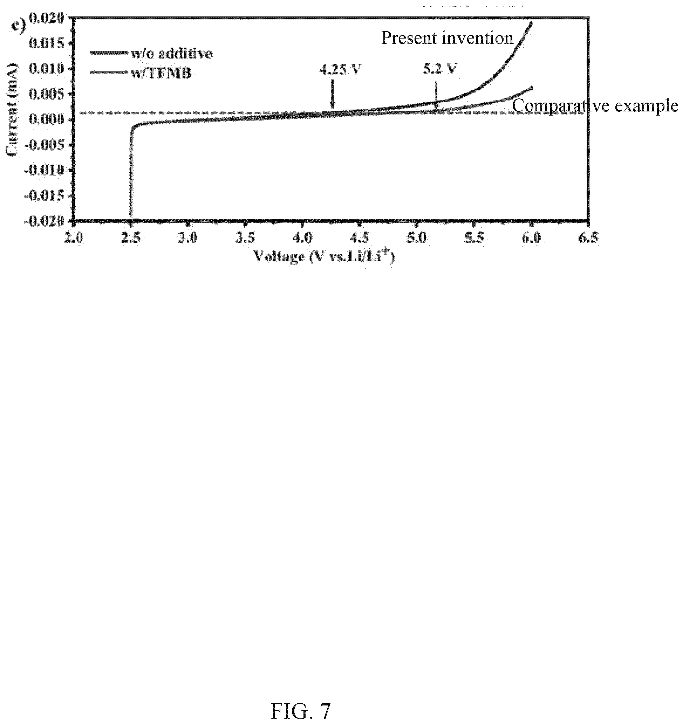

Referring to FIG. 7, which is a linear scanning voltammetric curve of the comparative example without the addition of the electrolyte additive and the preferred embodiment of the present invention with the addition of the electrolyte additive. From FIG. 7, it can be seen that the embodiment of the present invention still has stable electrical properties under high voltage (up to 5.2V), indicating that the electrolyte additive of the present invention activates the protective mechanism to maintain the electrical properties of the battery under high voltage.

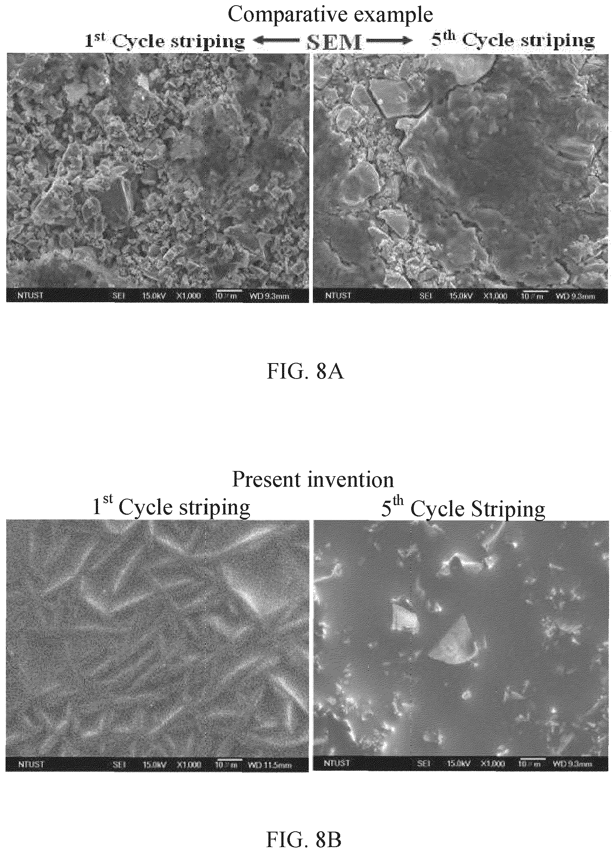

Referring to FIG. 8A and FIG. 8B, which are scanning electron microscopy (SEM) images of the comparative example without the addition of the electrolyte additive and the preferred embodiment of the present invention with the addition of 0.3 M of the electrolyte additive after 1 cycle and 5 cycles of lithium stripping, respectively. From the comparison of FIGS. 8A and 8B, it can be seen that the surface of the negative electrode of the embodiment of the present invention generates a denser and more favorable solid electrolyte interface layer, while the surface of the negative electrode of the comparative example is rough, indicating the generation of irregular lithium dendrites and poor solid electrolyte.

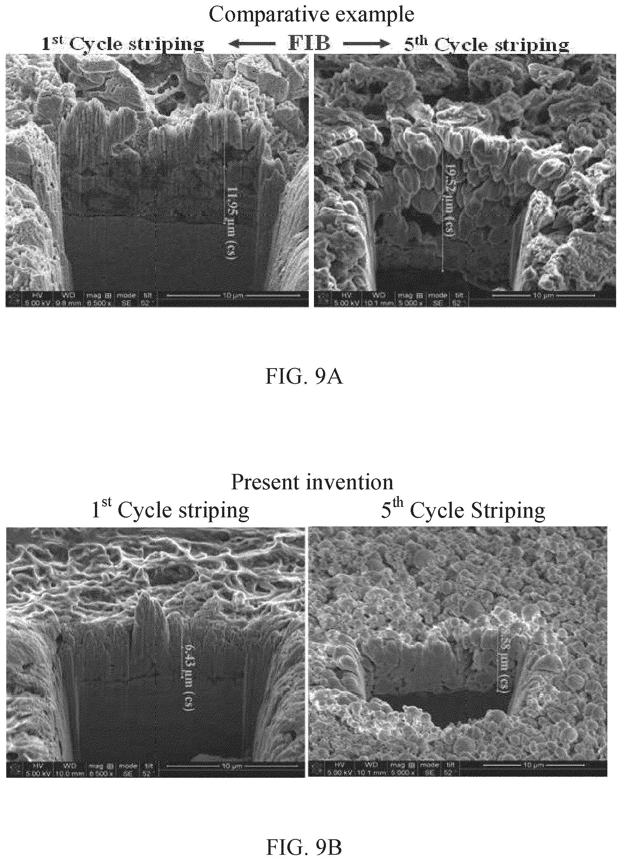

Referring to FIG. 9A and FIG. 9B, which are FIB-SEM images of the comparative example without the addition of the electrolyte additive and the preferred embodiment of the present invention with the addition of 0.3 M of the electrolyte additive after 1 cycle and 5 cycles of lithium stripping, respectively. Comparing FIG. 9A and FIG. 9B, it can be seen that the negative electrode of the embodiment of the present invention generates a relatively thin solid electrolyte interface (SEI) layer. Summarizing FIGS. 8A to 9B, it can be seen that the electrolyte additive of the present invention can cause the lithium battery to form a denser and thinner SEI layer. On the other hand, the thickness difference between FIG. 9A and FIG. 9B also shows that the electrolyte additive of the present invention activates the oxidation action of the inactive metal (e.g., dead lithium) and restores the inactive metal deposited on the negative electrode into the active metal ion and allows them to re-participate in the electrochemical reaction, and the thickness of the deposited layer also decreases dramatically.

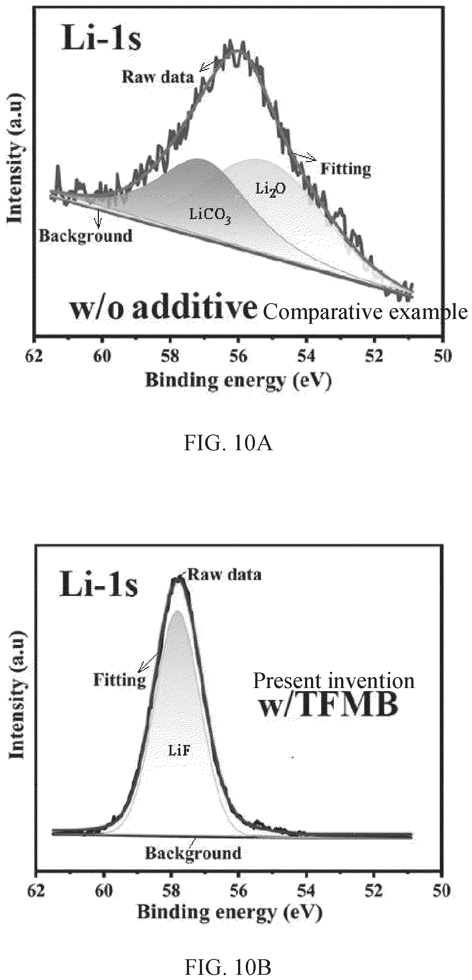

Referring to FIG. 10A and FIG. 10B, which are X-ray photoelectron spectroscopy (XPS) images of the comparative example without the addition of the electrolyte additive (FIG. 10A) and the preferred embodiment of the present invention with the addition of 0.3 M of the electrolyte additive (FIG. 10B), respectively. Comparing them, it can be seen that the negative electrode in the embodiment with the electrolyte additive has more signals of a benign SEI layer (lithium fluoride LiF), indicating that the present invention can indeed enable the negative electrode to generate a benign SEI layer and enhance the properties of the battery.

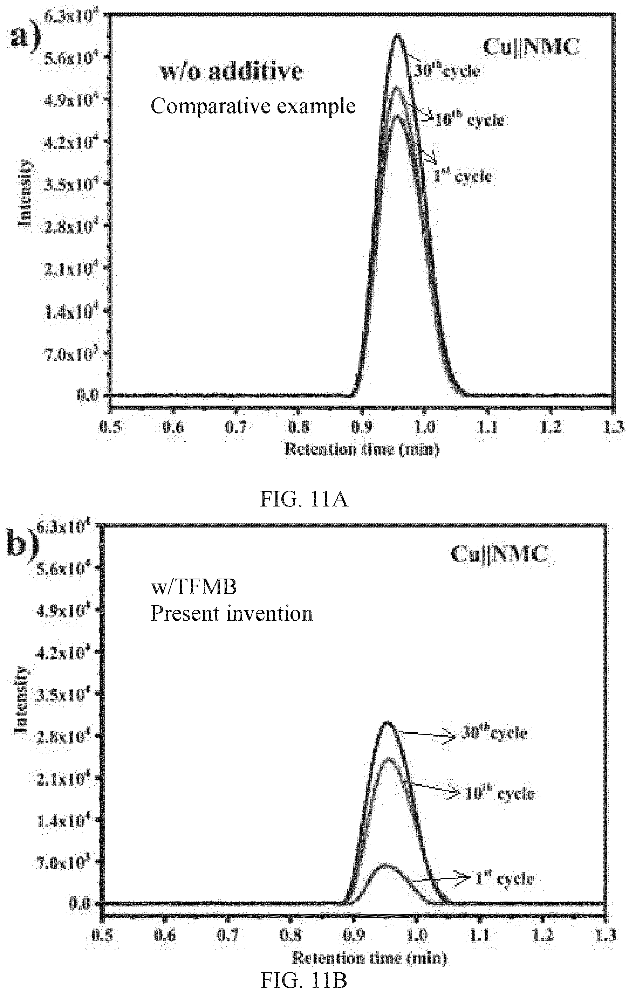

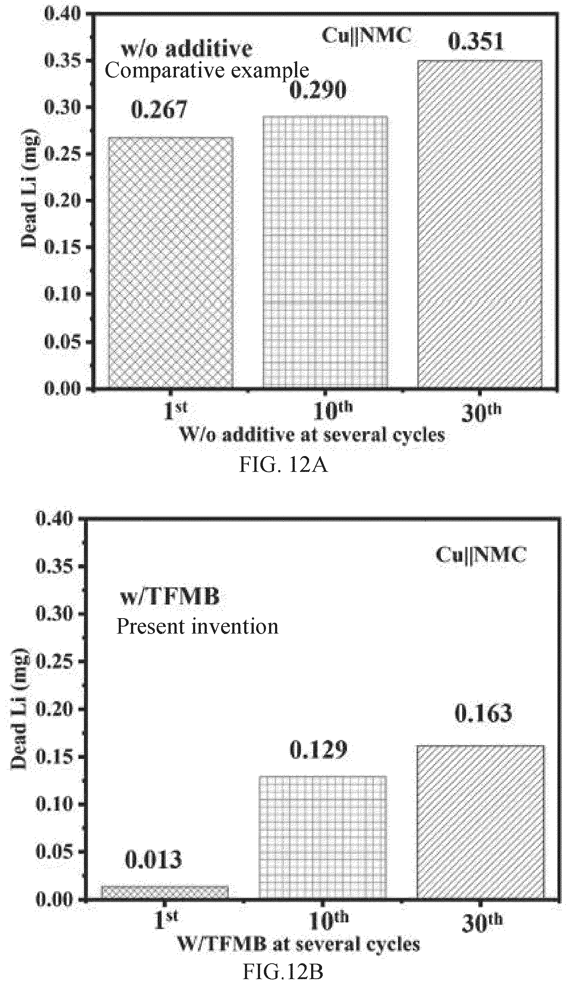

Next, according to the present invention, after the material formed on the negative electrode in FIGS. 9A and 9B is scraped off, it is analyzed by titration gas chromatography analysis. Since the scraped-off material contains lithium metal, which reacts with water to generate lithium oxide and hydrogen, the chemical formula of the reaction is Li+H₂O→Li₂O+H₂, and by calculating the amount of hydrogen generated, the amount of inactive lithium (dead lithium) can be deduced from the material on the negative electrode. Please refer to FIGS. 11A~11B and 12A-12B, which are titration gas chromatography (TGC) analyses of the comparative example without the addition of the electrolyte additive and the preferred embodiment of the present invention with the addition of the electrolyte additive, respectively. From FIGS. 11A and 12A, it can be seen that the comparative example generates more hydrogen gas and the corresponding inactive metal (dead lithium) compared to the embodiment of the present invention in FIGS. 11B and 12B, indicating that the electrolyte additive of the present invention activates the protective mechanism under high voltage, which causes the revival of the inactive lithium (dead lithium) deposited on the negative electrode, thereby prolonging the electrical lifespan of the battery's electrical properties.

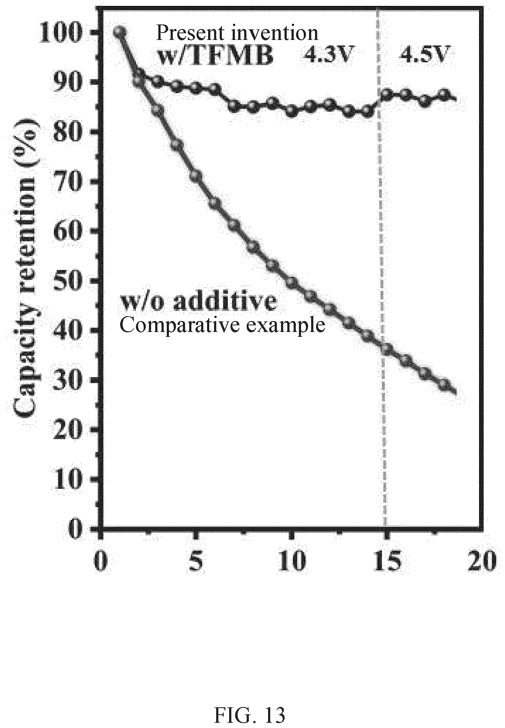

Referring to FIG. 13, which are test data of a capacity retention rate of the comparative example without the addition of the electrolyte additive and the preferred embodiment of the present invention with the addition of the electrolyte additive, using a normal voltage of 4.3 V and an overcharge voltage of 4.5 V for the charge/discharge cycles. FIG. 13 shows that the capacity retention rate of the present invention increased even when the charge/discharge cycle reached the 15th cycle, where the voltage was increased from 4.3V to 4.5V. On the contrary, the comparative example continued to decrease significantly, indicating that the electrolyte additive of the present invention activates the protective mechanism to maintain the electrical properties of the battery under high voltage.

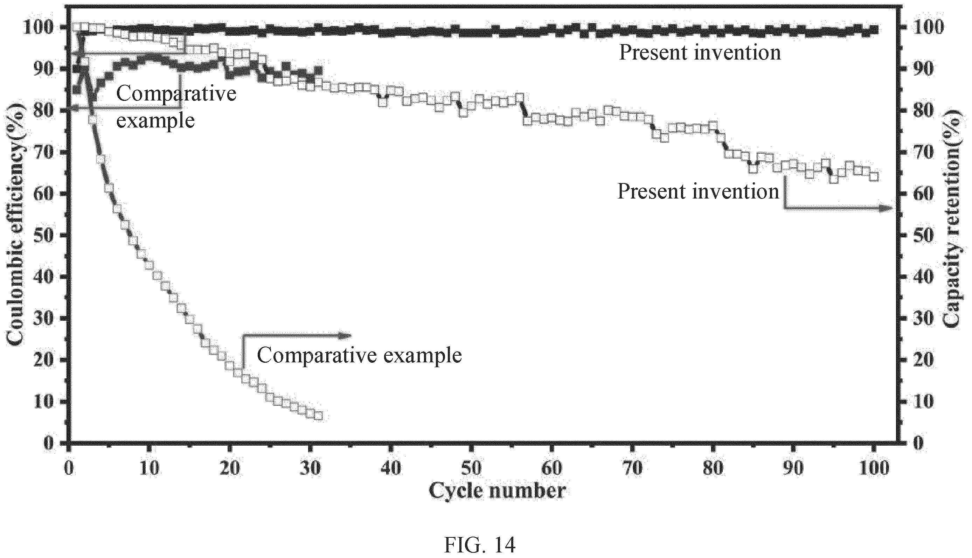

Referring to FIG. 14, which is test data of a coulombic efficiency and a capacity retention rate of the comparative example (without the electrolyte additive) and the preferred embodiment of the present invention (with the addition of 0.3 M of the electrolyte additive) for an anode-free lithium cell (Cu||NMC anode-free cell) using the electrochemical device in the test under 0. 2C constant charge/discharge.It can be seen that the embodiment of the present invention maintains nearly 100% coulombic efficiency and at least 60% capacity retention rate compared to the comparative example at the 100^{th} cycle of charge and discharge, whereas the comparative example consumes almost all of the capacity at the 30^{th} cycle of charge and discharge. Thus, it can be seen that the present invention is indeed capable of prolonging the lifespan of the electrochemical device and maintaining its high performance.

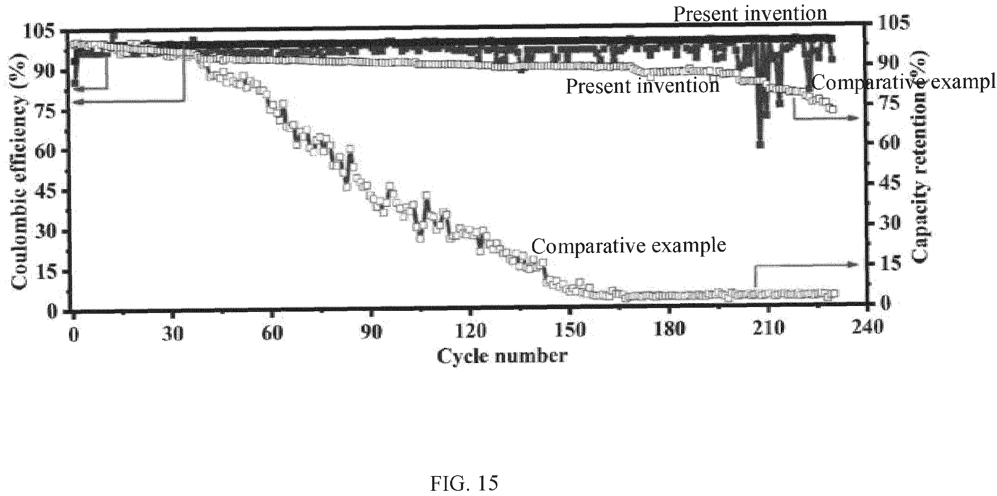

Referring to FIG. 15, which is test data of a coulombic efficiency and a capacity retention rate of the comparative example (without the electrolyte additive) and the preferred embodiment of the present invention (with the addition of 0.3 M of the electrolyte additive) for a lithium cell (Li||NMC cell) using the electrochemical device in the test under 0.2C constant charge/discharge. It can be seen from FIG. 12 that the embodiment of the present invention maintains nearly 100% coulombic efficiency and at least 60% or more capacity retention rate for more than 230 cycles of charge and discharge compared to the comparative example which consumes almost all of the capacity at the 150^{th} cycle. Thus, it can be seen that the present invention is capable of prolonging the lifespan of the electrochemical device and maintaining high performance.

The above specification, examples, and data provide a complete description of the present disclosure and use of exemplary embodiments. Although various embodiments of the present disclosure have been described above with a certain degree of particularity, or with reference to one or more individual embodiments, those with ordinary skill in the art could make numerous alterations or modifications to the disclosed embodiments without departing from the spirit or scope of this disclosure.

## Claims

1. A method for prolonging the lifespan of an electrochemical device, **characterized in that**: the steps of which comprise:
providing an electrochemical device comprising at least a positive electrode, a negative electrode, and an electrolyte provided in the electrochemical device, the electrolyte containing an electrolyte additive of one of the following Formula (1); 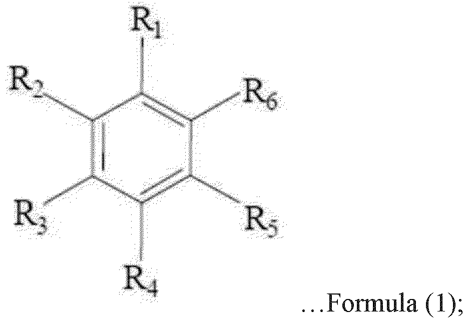 wherein R1, R2, R3, R4, R5, and R6 are two or a combination of Formula (2), Formula (3), Formula (4), and Hydrogen (H) below; 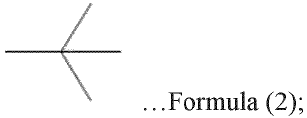 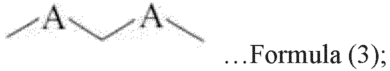 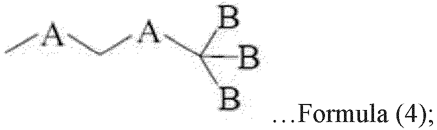 wherein A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H); and
charging and discharging the electrochemical device at least once with an overcharge voltage; the electrolyte additive maintaining an oxidation potential in an oxidized state at the positive electrode;
the electrolyte additive in the oxidized state shuttles to the negative electrode to oxidize a metal deposited on the negative electrode into a metal ion that re-participates in the electrochemical reaction of the electrochemical device; and the electrolyte additive is converted to a reduced state and shuttles back to the positive electrode where it restores the oxidized state.

2. The method according to claim 1, wherein the inactive metal in electrochemical device is converted to the metal ion when the electrochemical device is overcharged to a given voltage.

3. The method according to claim 1, wherein: the metal is an inactive metal that is not capable of participating in an oxidative or reduction reaction in the electrochemical device

4. The method according to claim 2, wherein: the metal is an inactive metal that is not capable of participating in an oxidative or reduction reaction in the electrochemical device.

5. The method according to claim 1, wherein: the electrochemical device comprises a lithium battery, a sodium battery, a zinc battery, an aluminum battery, a potassium battery, a magnesium battery, or a combination thereof; and
the metal and the metal ion correspond to the metal type of the electrochemical device.

6. The method according to claim 2, wherein: the electrochemical device comprises a lithium battery, a sodium battery, a zinc battery, an aluminum battery, a potassium battery, a magnesium battery, or a combination thereof; and
the metal and the metal ion correspond to the metal type of the electrochemical device.

7. The method according to claim 5, wherein: the electrochemical device comprises anode free battery.

8. The method according to claim 6, wherein: the electrochemical device comprises anode free battery.

9. The method according to claim 1, wherein: the negative electrode generates a beneficial solid electrolyte interface.

10. The method according to claim 2, wherein: the negative electrode generates a beneficial solid electrolyte interface.

11. An electrolyte additive comprising compounds of the following Formula (1), **characterized in that** wherein: 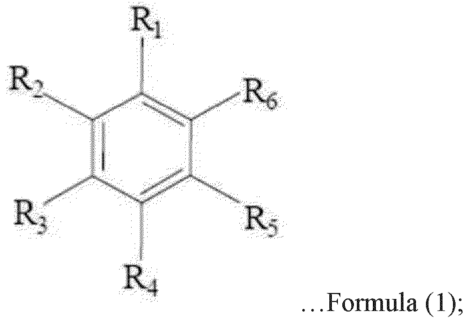 wherein R1, R2, R3, R4, R5, and R6 are two or a combination of Formula (2), Formula (3), Formula (4), and Hydrogen (H) below; 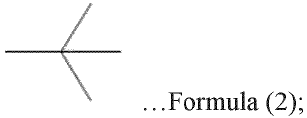 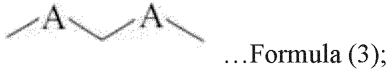 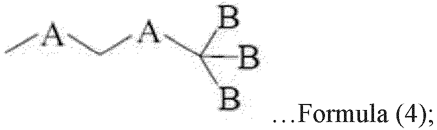 wherein A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).

12. The electrolyte additive according to claim 11, wherein: the electrolyte additive comprises:
R1 and R2 are neighboring substitutions of Formula (2) and Formula (3), respectively, of the chemical formulas of Formula (5-1) below;
R1 and R3 are interstitial substitutions of Formula (2) and Formula (3), respectively, of the chemical formulas of Formula (5-2) below;
R1 and R4 are para substitutions of Formula (2) and Formula (3), respectively, of the chemical formulas of Formula (5-3) below;
R1 and R2 are neighboring substitutions of Formula (2) and Formula (4), respectively, of the chemical formulas of Formula (6-1) below;
R1 and R3 are interstitial substitutions of Formula (2) and Formula (4), respectively, of the chemical formulas of Formula (6-2) below;
R1 and R4 are para substitutions of Formula (2) and Formula (4), respectively, of the chemical formulas of Formula (6-3) below;
R1, R2, R4, and R5 are substitutions of Formula (2) and Formula (4), respectively, of the chemical formulas of Formula (7-1) below; or
R1, R2, R4, and R6 are substitutions of Formula (2) and Formula (4), respectively, of the chemical formulas of Formula (7-2) below;

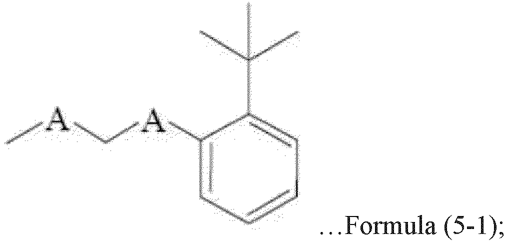

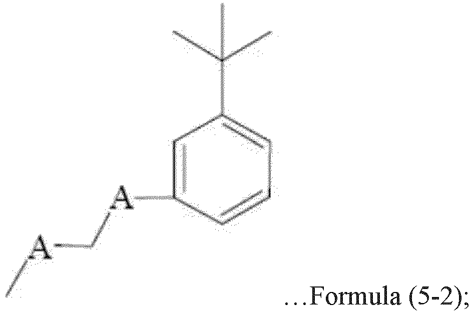

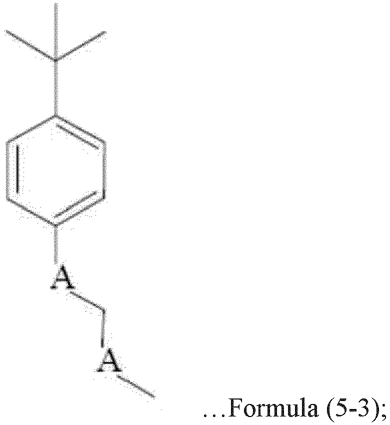

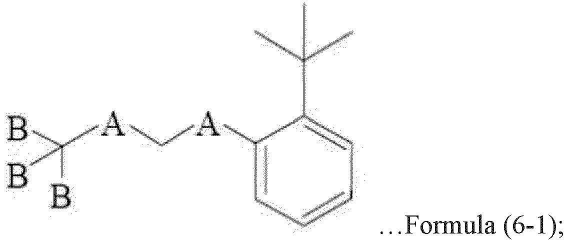

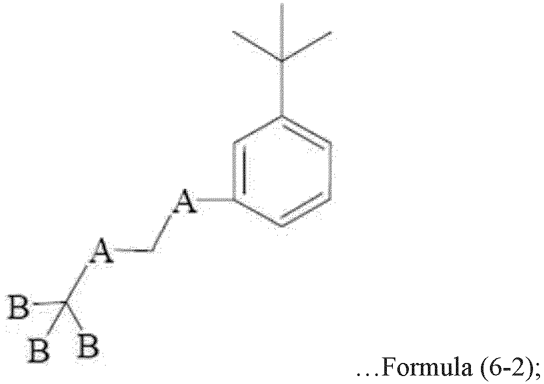

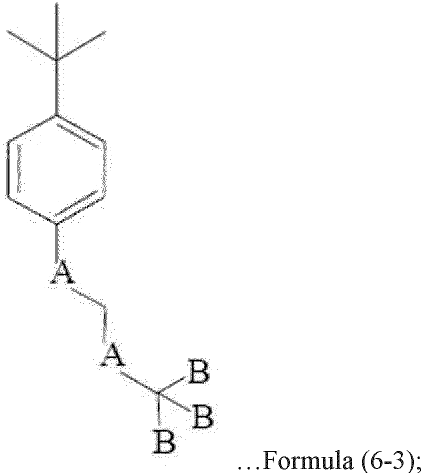

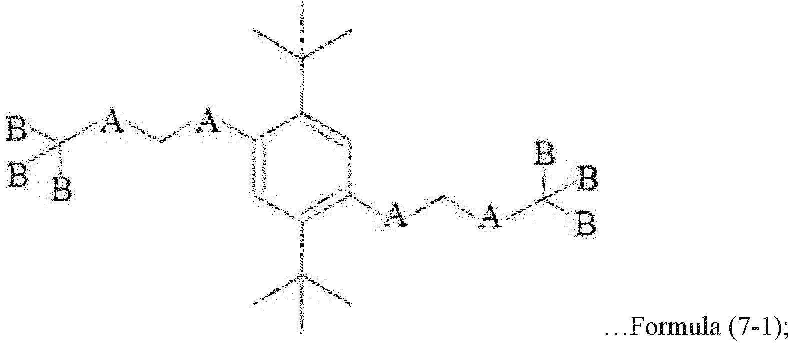

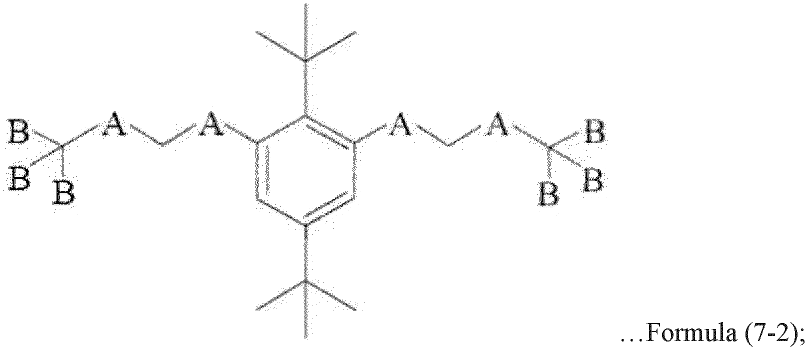

13. The electrolyte additive according to claim 12, wherein:
the compound of chemical Formula (5-1), Formula (5-2), or Formula (5-3) is obtained a compound of Formula (10) by using a compound of Formula (8) with a compound of Formula (9) in an environment of potassium carbonate and acetone, wherein a positively charged AH group in the Formula (8) is reacted with a carbon-oxygen bond next to a sulfonate group in the Formula (9); and
obtained using compounds of the Formula (10) and the Formula (11) by reacting a positively charged nitrogen atom in the Formula (11) with a hydrogen atom on an original positively charged AH group in the Formula (10); 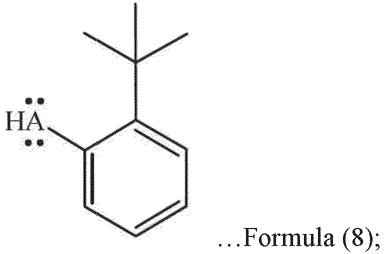 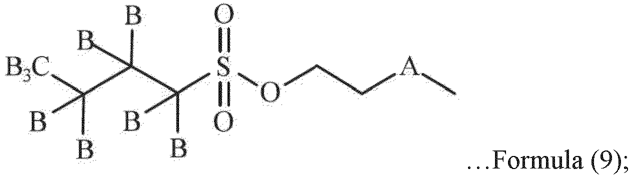 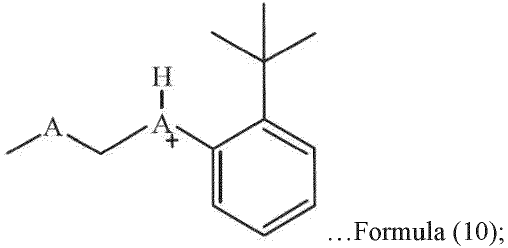 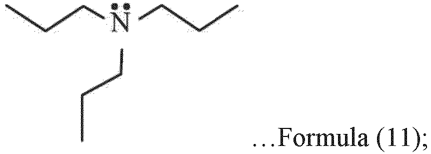
wherein: A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).

14. The electrolyte additive according to claim 12, wherein:
the compound of chemical Formula (6-1), Formula (6-2), or Formula (6-3) is obtained a compound of Formula (13) by using a compound of Formula (8) with a compound of Formula (12) in an environment of potassium carbonate (K₂CO₃) and acetone, wherein a positively charged AH group in the Formula (8) is reacted with a carbon-oxygen bond next to a sulfonate group in the Formula (12); and
obtained using compounds of the Formula (13) and the Formula (11) by reacting a positively charged nitrogen atom in the Formula (11) with a hydrogen atom on an original positively charged AH group in the Formula (13); 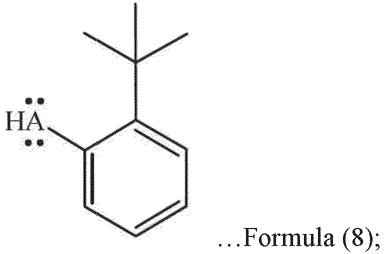 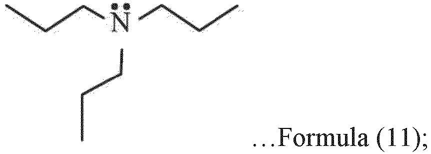 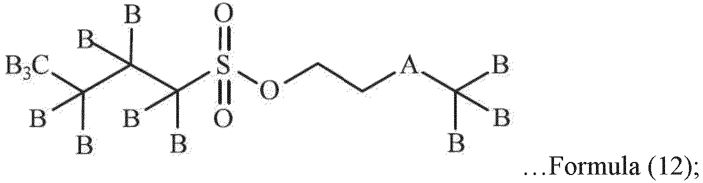 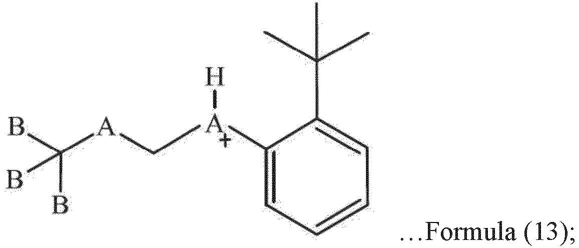
wherein: A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).

15. The electrolyte additive according to claim 12, wherein:
the compound of chemical Formula (7-1) or Formula (7-2) is obtained a compound of Formula (15) by using a compound of Formula (14) with compounds of two Formulas (12) in an environment of potassium carbonate (K₂CO₃) and acetone, wherein two positively charged AH groups in the Formula (14) is reacted with a carbon-oxygen bond next to a sulfonate group in two Formulas (12); and
obtained using compounds of the Formula (15) and the two Formulas (11) by reacting a positively charged nitrogen atom in two Formulas (11) with a hydrogen atom on two original positively charged AH groups in the Formula (15); 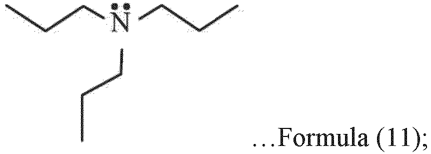 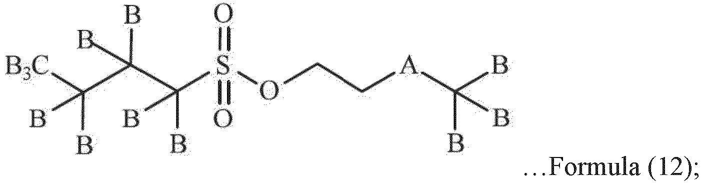 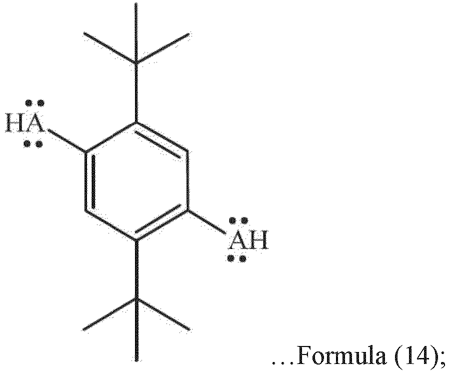 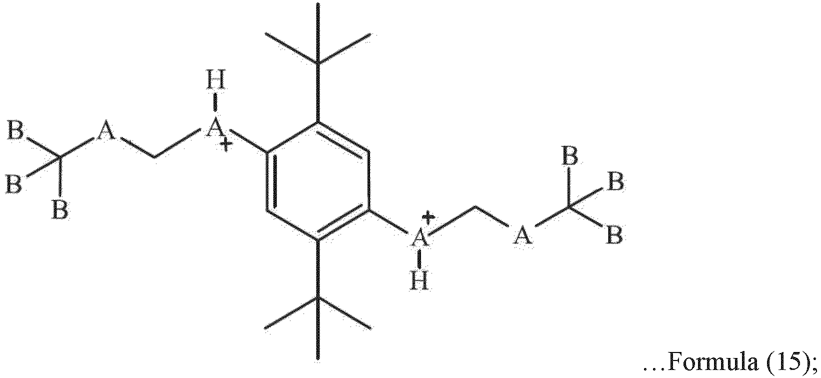
wherein: A denotes oxygen (O), sulfur (S), selenium (Se), tellurium (Te), or combinations thereof, B is halogen, nitrile group (CN), hydrogen (H), nitro group (NO₂), nitrosyl group (NO), amine group (NH₂), or combinations thereof; and the remaining elements not denoted are carbon (C) or hydrogen (H).
